# EUROPEAN PATENT APPLICATION

(11) **EP 1 688 951 A1**
(43) Date of publication of application: **09.08.2006**
(21) Application number: 06002163.1
(22) Date of filing: 02.02.2006
(51) Int. Cl.: G11B 27/10, G11B 27/034, G11B 27/28, H04N 5/76

(54) **Recording/reproducing apparatus**

(30) Priority: 02.02.2005 JP 2005025952
(71) Applicant: Funai Electric Co., Ltd., Daito-shi, Osaka 574-0031 (JP)
(72) Inventor: Nagamura, Yoshitomi, Daito-shi Osaka 574-0013 (JP)
(74) Representative: Beetz & Partner

(57) **Abstract**

A recording/reproducing apparatus for receiving a broadcast and recording on a recording medium such as a DVD and HDD comprises segmentation means for storing a position, at which a recording start position and a recording end position are switched and a program and a CM are switched, as chapter segmentation, time detection means for detecting recording time of each chapter between the segmentation, comparison means for comparing total time of an odd-numbered chapter from the start of recording with total time of an even-numbered chapter from the start of recording, play list creation means for creating a play list made up of position information of only the odd-numbered chapter when the total time of the odd-numbered chapter is longer and, also, creating a play list made up of position information of only the even-numbered chapter when the total time of the even-numbered chapter is longer, and reproduction means for reproducing by extracting a chapter corresponding to the position information recorded in the play list.

## Description

### BACKGROUND OF THE INVENTION

### Field of the Invention

The present invention relates to a recording/reproducing apparatus for recording a broadcast. More particularly, the present invention relates to a recording/reproducing apparatus capable of creating a desired play list and reproducing a broadcast.

### Description of the Related Art

A conventional recording/reproducing apparatus for recording a broadcast on a recording medium has been disclosed in JP-A 2001-86468. This recording/reproducing apparatus has a function of cutting a commercial (hereinafter, simply referred to as "CM") of a recorded broadcast and, then, reproducing the broadcast. A broadcast includes a video signal and audio signal. The audio signal has an audio mode such as a monaural mode, a bilingual mode and a stereo mode. Many of the audio modes during a program execution included in a broadcast are a monaural mode or a bilingual mode, and an audio mode during a CM break is a stereo mode.

When a broadcast is recorded, the recording/reproducing apparatus detects that an audio mode is switched. Then, the switched position is set as segmentation, and position information of the segmentation is recorded. When recording is completed, a play list excluding a segment corresponding to a CM from segments between the segmentation is created. The play list includes the position information of the segments between the segmentation, and the segment of the position information to be recorded to the play list from an original recording is taken out sequentially in reproducing. This enables a user to watch programs while cutting a CM. Determination whether or not the segment corresponds to a CM is made in such a manner that the segment is determined to be a CM when a time between each segment is shorter than 5 minutes and can be divided by 30 seconds.

However, according to the aforementioned conventional recording/reproducing apparatus, when a length of one segment of a program is shorter than 5 minutes and can be divided by 30 seconds, the segment is determined as a CM; therefore, the program segment is not included in a play list. On the other hand, when a length of a CM is longer than 5 minutes and cannot be divided by 30 seconds, the segment is determined as a program; therefore, the CM segment is included in a play list. Consequently, there is a problem in that the purpose to watch programs while cutting a CM is not achieved and it is inconvenience for users.

### SUMMARY OF THE INVENTION

In view of such a problem, it is an object of the present invention to provide a recording/reproducing apparatus which can improve convenience for users.

In order to attain the aforementioned object, the present invention provides a recording/reproducing apparatus for receiving a broadcast and recording on a recording medium, the apparatus comprising: segmentation means for storing a position, at which a recording start position and a recording end position are switched and a program and a CM are switched, as chapter segmentation; time detection means for detecting recording time of each chapter between the segmentation; comparison means for comparing total time of an odd-numbered chapter from the start of recording with total time of an even-numbered chapter from the start of recording; play list creation means for creating a play list made up of position information of only the odd-numbered chapter when the total time of the odd-numbered chapter is longer and, also, creating a play list made up of position information of only the even-numbered chapter when the total time of the even-numbered chapter is longer; and reproduction means for reproducing by extracting a chapter corresponding to the position information recorded in the play list.

The present invention also provides a recording/reproducing apparatus for receiving a broadcast and recording on a recording medium, the apparatus comprising: segmentation means for storing a position, at which a recording start position and a recording end position are switched and a program and a CM are switched, as segmentation; time detection means for detecting recording time of each segment between the segmentation; comparison means for comparing total time of an odd-numbered segment from the start of recording with total time of an even-numbered segment from the start of recording; play list creation means for creating a play list made up of position information of only the odd-numbered segment when the total time of the odd-numbered segment is longer and, also, creating a play list made up of position information of only the even-numbered segment when the total time of the even-numbered segment is longer; and reproduction means for reproducing by extracting a segment corresponding to the position information recorded in the play list.

The recording/reproducing apparatus further comprises manual segmentation means for storing a desired position as the segmentation by a user operation.

In the recording/reproducing apparatus, the position at which the program and the CM are switched is detected by change of an audio mode.

In the recording/reproducing apparatus, the position at which the program and the CM are switched is detected by no audio portion of an audio signal.

According to the present invention, total time of an odd-numbered chapter from the start of recording is compared with total time of an even-numbered chapter from the start of recording and a play list made up of only longer chapter is created, whereby a CM can be surely cut and only a program can be reproduced to watch. Thus, convenience for users can be improved. Furthermore, a user can watch a program by feeding the program forward and backward for every chapter.

Further, according to the present invention, total time of an odd-numbered segment from the start of recording is compared with total time of an even-numbered segment from the start of recording and a play list made up of only longer segment is created, whereby a CM can be surely cut and only a program can be reproduced to watch. Thus, convenience for users can be improved.

Further, according to the present invention, manual segmentation means for storing a desired position as a segmentation by a user operation is provided, whereby modification may be made when the start or end position of a CM is erroneously acknowledged.

Further, according to the present invention, a position at which a program and a CM are switched may be readily detected by change of an audio mode.

Further, according to the present invention, a position at which a program and a CM are switched may be readily detected by no audio portion of an audio signal.

### BRIEF DESCRIPTION OF THE DRAWINGS

FIG. 1 is a block diagram showing a configuration of an HDD recorder according to an embodiment of the present invention;
FIG. 2 is a flowchart showing an operation in recording of the HDD recorder according to the embodiment of the present invention;
FIG. 3 shows a chapter formed in recording of the HDD recorder according to the embodiment of the present invention; and
FIG. 4 shows a chapter formed in recording of the HDD recorder according to the embodiment of the present invention.

### DESCRIPTION OF THE PREFERRED EMBODIMENT

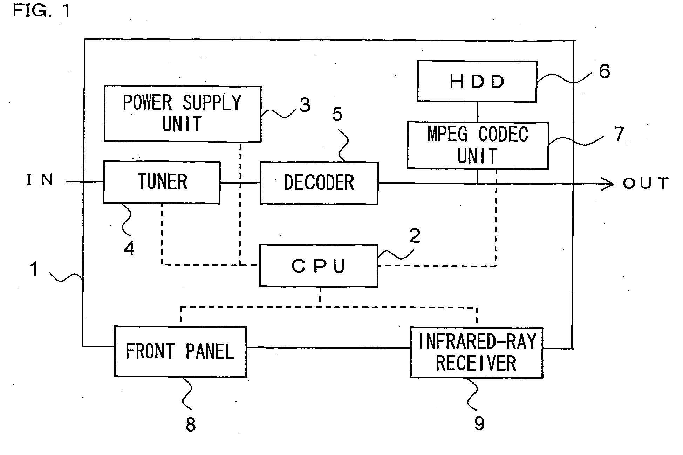

An embodiment of the present invention will be described below with reference to the drawings. FIG. 1 is a block diagram showing a configuration of an HDD recorder which is a recording/reproducing apparatus according to an embodiment. The HDD recorder 1 has a CPU 2 which controls each part. A power supply unit 3, a tuner 4, a decoder 5, an HDD 6, an MPEG (Moving Picture Experts Group) codec unit 7, a front panel 8, and an infrared-ray receiver 9 are connected to the CPU 2.

The power supply unit 3 supplies electric power to each part via the CPU 2. The tuner 4 branches a broadcasting radio wave received via an antenna (not shown) connected to the HDD recorder 1, and outputs an audio signal and a video signal. The decoder 5 converts the audio signal and the video signal to a digital signal. The MPEG codec unit 7 compresses the digital signal to data in accordance with MPEG standards. The HDD 6 stores digital data.

The front panel 8 is disposed at the front surface of the HDD recorder 1, and displays an operation state while performing user's operation. The infrared-ray receiver 9 receives an operation signal of a remote controller (not shown). Furthermore, there is provided a memory (not shown) which stores an operation program of the HDD recorder 1 and temporarily stores computing result by the CPU 2.

When recording is started by operation of the front panel 8 or the remote controller, a television broadcasting radio wave received by the antenna is branched by the tuner 4, and an audio signal and a video signal are outputted. The audio signal and the video signal are converted to a digital signal by the decoder 5 and compressed to data in accordance with MPEG standards by the MPEG codec unit 7 to be recorded on the HDD 6. Thus, recording of a broadcast is performed.

When reproducing of the broadcast recorded by the operation of the front panel 8 or the remote controller is started, the compressed data recorded from the HDD 6 is extracted. The extracted, compressed data is expanded by the MPEG codec unit 7 and converted to an audio signal and a video signal by an encoder (not shown) to be outputted. Thus, the recorded broadcast can be watched.

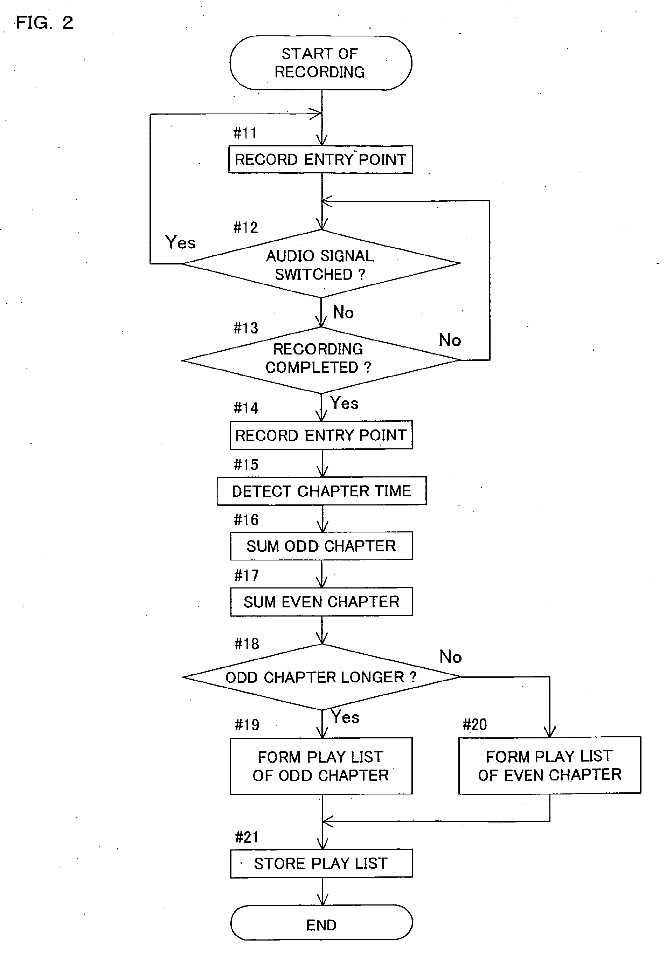

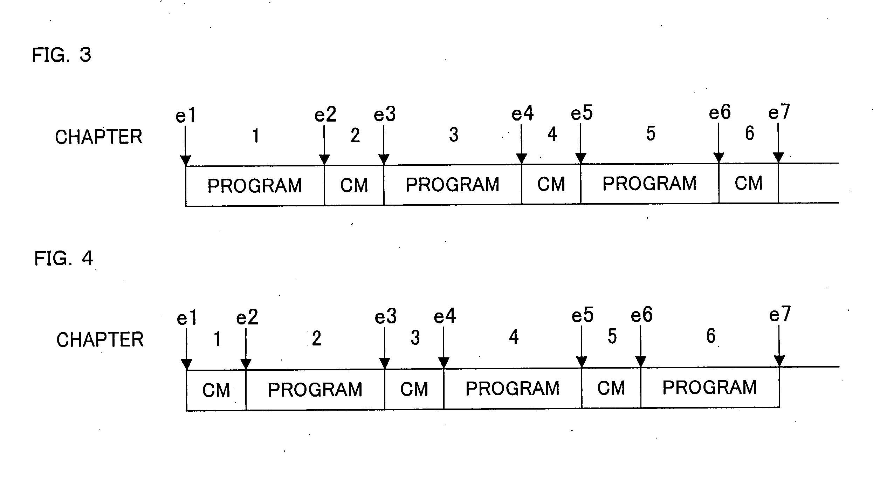

Furthermore, a play list in which a CM is cut simultaneously with recording is stored in the HDD 6. FIG. 2 is a flowchart showing this operation. When recording starts, position information of a recording start position is stored in step #11 and an entry point e1 is given to the recording start position as shown in FIG. 3.

It is determined whether or not an audio mode of the audio signal is changed in step #12. The audio signal has an audio mode such as a monaural mode, a bilingual mode, and a stereo mode. Many of the audio modes during a program execution included in a broadcast are a monaural mode or a bilingual mode, and an audio mode during a CM break is a stereo mode. Therefore, a start position or an end position of a CM included during a broadcast according to whether or not the audio mode is switched can be detected.

When it is detected that the audio mode is switched, the processing returns to step #11. Then, the present position information in recording is stored, and an entry point is given to the present position. When it is not detected that the audio mode is switched, it is determined whether or not recording in step #13 is completed. When recording is not completed, the processing returns to step #12, and steps #12 and #13 are repeatedly performed.

This gives entry points e2, e3, ... (refer to FIG. 3) at positions where the audio mode is switched while recording is completed. When recording is completed, position information of a recording end position is stored in step #14, and an entry point is given at the recording end position. In addition, FIG. 3 shows the case where a program is during a broadcast when recording starts. In the case where a CM is during a broadcast when recording starts, entry points e1, e2, e3, ... are given as shown in FIG. 4.

As shown in FIGS. 3 and 4, a first chapter, a second chapter, a third chapter, ... are made in order between each entry point e1, e2, e3, .... Consequently, steps #11 to #14 constitute segmentation means which stores a switched position of the audio mode as chapter segmentation. Watching can be made in such a manner that the chapter is fed forward and/or backward while skipping every chapter when reproducing.

In step #15, each chapter time between each entry point e1, e2, ... is detected (time detection means). A recording time from the start of recording to an odd-numbered chapter (hereinafter, referred to as "odd chapter") is summed in step #16. In step #17, a recording time from the start of recording to an even-numbered chapter (hereinafter, referred to as "even chapter") is summed.

It is determined whether or not total time of the odd chapter is longer than that of the even chapter in step #18 (comparison means). When the total time of the odd chapter is longer, the processing proceeds to step #19 and a play list made up of position information of only the odd chapter is created. When the total time of the even chapter is longer, the processing proceeds to step #20 and a play list made up of position information of only the even chapter is created. Then, the created play list is stored in the HDD 6 in step #21.

In a general broadcast, total time of a program broadcasted between programs is longer than that of a CM. Consequently, play list forming means, which created a play list of only programs in which a CM is cut, is composed of steps #19 to #21.

The created play list is called by a predetermined operation from the HDD 6 in reproducing by the HDD recorder 1. Then, a program portion is extracted from an original recording based on position information to be stored in the called play list can be reproduced by reproduction means.

Furthermore, a predetermined position can be stored as chapter segmentation by operating the front panel 8 or the remote controller (manual segmentation means). At this time, the play list can be created by executing steps #15 to #21 by a predetermined operation. Consequently, in the case where the audio mode is not switched between a program and a CM and erroneous acknowledgment is made, a play list in which a CM is cut can be created by giving the chapter segmentation by manual operation.

In this embodiment, the position where a program and a CM are switched is detected by that the audio mode is switched; however, other method may be used. For example, it is known that an audio signal with no audio portion of several hundreds of milliseconds is formed when a program and a CM are switched. Therefore, the position where the program and CM are switched may be detected by detecting the audio signal with no audio portion.

Furthermore, the position where the program and CM are switched is stored as chapter segmentation; however, a play list excluding a segment corresponding to a CM from segments between the segmentation at the end of recording may be created by storing segmentation position information which is not related to a chapter in recording. That is, total time of an odd-numbered segment and total time of an even-numbered segment from the start of recording are compared and, then, a play list made up of position information of only the segment which is longer in total time is created.

Further, the HDD recorder 1 for recording on HDD is described in this embodiment; however, a recording/reproducing apparatus for recording on other recording medium, such as a DVD, HD, DVD, Blue-ray Disc may be used.

## Claims

1. A recording/reproducing apparatus for receiving a broadcast and recording on a recording medium, the apparatus comprising:
segmentation means for storing a position, at which a recording start position and a recording end position are switched and a program and a CM are switched, as chapter segmentation;
time detection means for detecting recording time of each chapter between the segmentation;
comparison means for comparing total time of an odd-numbered chapter from the start of recording with total time of an even-numbered chapter from the start of recording;
play list creation means for creating a play list made up of position information of only the odd-numbered chapter when the total time of the odd-numbered chapter is longer and, also, creating a play list made up of position information of only the even-numbered chapter when the total time of the even-numbered chapter is longer; and
reproduction means for reproducing by extracting a chapter corresponding to the position information recorded in the play list.

2. The recording/reproducing apparatus according to claim 1 , further comprising:
manual segmentation means for storing a desired position as the segmentation by a user operation.

3. The recording/reproducing apparatus according to claim 1 or 2, wherein
the position at which the program and the CM are switched is detected by change of an audio mode.

4. The recording/reproducing apparatus according to claim 1 or 2, wherein
the position at which the program and the CM are switched is detected by no audio portion of an audio signal.

5. A recording/reproducing apparatus for receiving a broadcast and recording on a recording medium, the apparatus comprising:
segmentation means for storing a position, at which a recording start position and a recording end position are switched and a program and a CM are switched, as segmentation;
time detection means for detecting recording time of each segment between the segmentation;
comparison means for comparing total time of an odd-numbered segment from the start of recording with total time of an even-numbered segment from the start of recording;
play list creation means for creating a play list made up of position information of only the odd-numbered segment when the total time of the odd-numbered segment is longer and, also, creating a play list made up of position information of only the even-numbered segment when the total time of the even-numbered segment is longer; and
reproduction means for reproducing by extracting a segment corresponding to the position information recorded in the play list.

6. The recording/reproducing apparatus according to claim 5, further comprising:
manual segmentation means for storing a desired position as the segmentation by a user operation.

7. The recording/reproducing apparatus according to claim 5 or 6, wherein
the position at which the program and the CM are switched is detected by change of an audio mode.

8. The recording/reproducing apparatus according to claim 5 or 6, wherein
the position at which the program and the CM are switched is detected by no audio portion of an audio signal.
